# EUROPÄISCHE PATENTSCHRIFT

(11) **EP 1 366 957 B1**
(45) Veröffentlichungstag und Bekanntmachung des Hinweises auf die Patenterteilung: **02.03.2005**
(21) Anmeldenummer: 03400050.5
(22) Anmeldetag: 23.08.2000
(51) Int. Cl.: B60R 5/04, B60R 21/08

(54) **Laderaumabtrennung für Kraftfahrzeuge**
Load compartment partitioning device for vehicles
Séparateur du compartiment à bagages de véhicules

(30) Priorität: 28.09.1999 DE 19946382
(43) Veröffentlichungstag der Anmeldung: 03.12.2003
(62) Teilanmeldung aus: 00117359.0
(73) Patentinhaber: BOS GmbH & Co. KG, 73760 Ostfildern (DE)
(72) Erfinder: Seel, Holger, 71134 Aidlingen (DE); Schlecht, Werner P., 71665 Vaihingen/Enz (DE); Ehrenberger, Marina, 73730 Esslingen (DE)
(74) Vertreter: Patentanwälte Ruff, Wilhelm, Beier, Dauster & Partner

(56) Entgegenhaltungen:
- DE-A- 19 645 503
- DE-A- 19 811 886
- GB-A- 2 334 488

## Beschreibung

Die Erfindung betrifft eine Laderaumabtrennung für Kraftfahrzeuge mit einem Flächengebilde, das mit einem ersten Ende im Bereich der Rückenlehnenoberkante von Fondsitzen angebracht und mit dem zweiten Ende in einer Betriebsstellung im Bereich des Dachhimmels verankert und in einer Außerbetriebsstellung hinter der Rückenlehne liegt, wobei ein Servomotor als Antrieb vorgesehen ist, mit dem das zweite Ende des Flächengebildes aus der Außerbetriebsstellung in die Betriebsstellung oder umgekehrt verfahrbar ist.

Laderaumabtrennungen dieser Art sind für Kombifahrzeuge in der Form von ausziehbaren Haltenetzen allgemein bekannt, die in der Außerbetriebsstellung aufgerollt in einer Kassette untergebracht sind und aus dieser von Hand nach oben gezogen werden können, um im Bereich des Dachhimmels in entsprechende Halterungen eingehängt und dort sicher verankert zu werden. Da diese Trennnetze auch dann in Funktion treten sollen, wenn beispielsweise die Rückenlehnen der Fondsitze nach vorne umgeklappt sind, können diese Netze so weit aus ihrer Kassette ausgezogen werden, daß sie auch die Höhe zwischen Dachhimmel und umgeklappter Rückenlehne überbrücken. Um bei solchen Ausführungsformen dann, wenn die Netze nur von der Oberkante der nicht umgeklappten Rückenlehnen bis zum Dachhimmel verlaufen sollen, eine ausreichende Sicherung gegen ein weiteres Ausziehen zu erreichen, sind in der Regel verzahnungsartig in die Maschen des Netzes eingreifende Halteeinrichtungen vorgesehen, die im Bereich des Auszugsschlitzes der Kassette angeordnet sind und so die Fixierung eines Trennnetzes sichern, das nicht voll von seiner Aufwickelwelle abgezogen ist.

Aus dem Dokument DE 198 11 886 A1 ist eine Laderaumabtrennung nach dem Oberbegriff des Anspruchs 1 bekannt.

Der Erfindung liegt die Aufgabe zugrunde, bei einer Laderaumabtrennung der eingangs genannten Art für eine wesentlich einfachere Betätigung zu sorgen.

Gelöst wird diese Aufgabe bei einer Laderaumabtrennung der eingangs genannten Art dadurch, dass ein Sensor zur Überwachung der Ladehöhe vorgesehen ist, der bei Überschreiten einer bestimmten Ladehöhe den Antrieb aktiviert. Der Antrieb zum Anbringen der Laderaumabtrennung wird selbsttätig aktiviert, wenn der Kofferraum, z.B. eines Kombifahrzeuges, so hoch beladen wird, daß zumindest eines der Gepäckstücke in einem Bereich zu liegen kommt, der in der Höhe der Rückenlehnen der Fondsitze liegt. In einem solchen Fall würde die Gefahr bestehen, daß dieses Gepäckstück bei einem Bremsvorgang nach vorne in den Bereich des Fahrgastraumes rutscht und zu Verletzungen oder Beschädigungen führen kann. Diese Ausgestaltung macht daher die Betätigung eines Schalters durch den Fahrer nicht notwendig und sichert selbsttätig die Anordnung einer Laderaumabtrennung zu.

In Weiterbildung der Erfindung ist das zweite Ende des Flächengebildes mit Kupplungselementen versehen, die mit karosseriefesten Aufnahmen in der Betriebsstellung zusammenwirken und diese Positionierung über eine Verriegelungseinrichtung fixieren. Bei dieser Ausgestaltung wird es daher nur noch notwendig, daß ein Betätigungsschalter ausgelöst wird, so daß dann die Laderaumabtrennung selbsttätig in die Betriebsstellung gelangt und dort auch arretiert wird.

In Weiterbildung der Erfindung kann ein Sensor zu Überwachung der Verriegelung der Betriebsstellung vorgesehen sein, der als ein von mindestens einem Kupplungselement betätigter Endschalter ausgebildet sein kann.

In Weiterbildung der Erfindung kann aber auch eine Überwachungseinrichtung vorgesehen werden, die im Crashfall die schlagartige Verstellung des Flächengebildes in die Betriebsstellung veranlaßt. Eine solche Überwachungseinrichtung kann mit einem pyrotechnischen Antrieb oder mit einem Federspeicher als Antrieb verbunden sein, so daß selbst dann, wenn bei geringer Beladung des Kofferraums die Laderaumabtrennung nicht in ihre Betriebsstellung gebracht worden ist, jedenfalls bei einem Unfall - ähnlich wie bei den ausfahrbaren Kopfstützen von Cabriolets - die Sicherheit gegeben ist, daß Gepäckstücke nicht in den Fahrgastraum geschleudert werden können.

In Weiterbildung der Erfindung kann bei einer Laderaumabtrennung, bei der das Flächengebilde als ein Trenngitternetz ausgebildet und das zweite Ende desselben mit einer durchgehenden Führungsstange versehen ist, vorgesehen werden, daß die beiden Enden der Führungsstange in je einer Nut an der Seitenwand der Fahrzeugkarosserie geführt sind, und daß dieser Nut der Antrieb für die Bewegung des Flächengebildes zugeordnet ist.

Es ist aber auch möglich, bei einer Laderaumabtrennung, bei der das Flächengebilde in einer Kassette aufrollbar ist, der Kassette den Antrieb für das Flächengebilde zuzuordnen, wobei dieser in an sich bekannter Weise als ein Schwenkhebelantrieb ausgebildet sein kann, mit dem das Flächengebilde nach oben gedrückt wird.

In Weiterbildung der Erfindung kann die Rollowelle des Trenngitternetzes in der verriegelten und gesicherten Betriebsstellung auch dynamisch blockiert werden, so daß die übliche Verzahnung, die in die Gittermaschen eingreift, nicht vorgesehen zu werden braucht. Die Rollowelle selbst kann dabei in bekannter Weise blockiert werden, wenn sie insbesondere von dem vorher erwähnten Sensor das Signal erhält, daß das Trenngitternetz an seinen oberen Befestigungspunkten fest und ausreichend fixiert ist.

Die Erfindung ist anhand von Ausführungsbeispielen in der Zeichnung dargestellt und wird im folgenden erläutert. Es zeigen:
- Fig. 1: eine perspektivische Teilansicht des Laderaumes eines als Kombi ausgebildeten Kraftfahrzeuges mit einer hochgefahrenen Laderaumabtrennung nach der Erfindung,
- Fig. 2: eine vergrößerte Teildarstellung des oberen Endbereiches der Laderaumabtrennung nach Fig. 1,
- Fig. 3: eine Darstellung ähnlich Fig. 2, jedoch mit einem vollständig vom Antriebsgestänge nach Fig. 2 abgenommenem Trenngitternetz,
- Fig. 4: eine schematische Darstellung des Zusammenwirkens zwischen Laderaumabtrennungsantrieb und Trenngitter ähnlich Fig. 2, jedoch bei einer anderen Ausführungsform,
- Fig. 5: die Antriebsausführung nach Fig. 4 mit abgenommenem Trenngitter,
- Fig. 6: eine perspektivische Teildarstellung eines Lade- oder Kofferraums ähnlich Fig. 1, jedoch bei einer anderen Ausführungsform für den Antrieb der Laderaumabtrennung und
- Fig. 7: eine weitere Variante einer Laderaumabtrennung in einer Darstellung ähnlich Fig. 1.

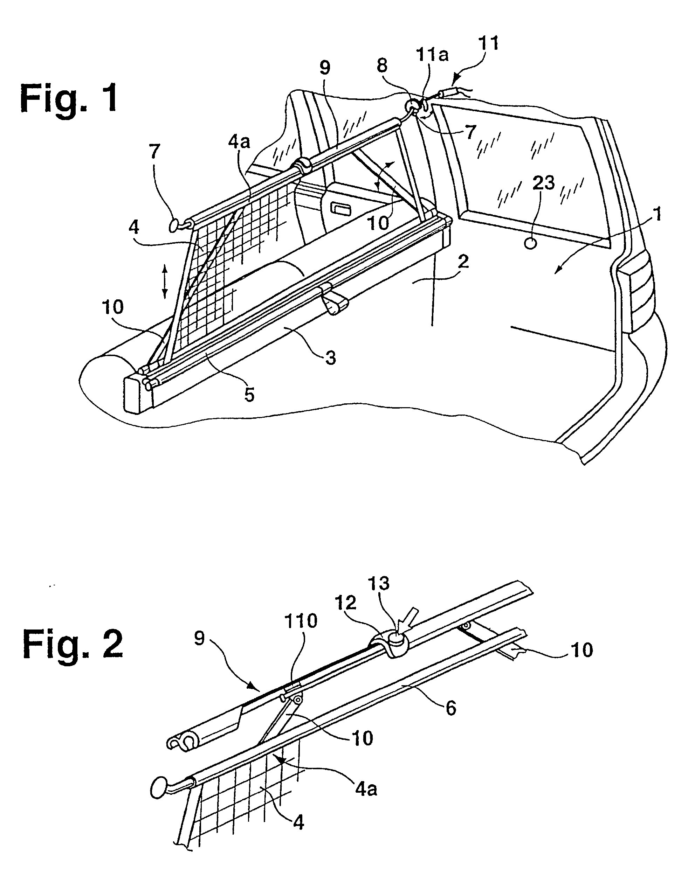

In Fig. 1 ist der Lade- oder Kofferraum 1 eines nicht näher dargestellten Kombikraftfahrzeuges zu erkennen, der nach vorne zu einem Fahrgastraum hin durch die hochgestellten Rückenlehnen 2 der Fondsitze abgegrenzt ist. Im Bereich der Oberkante der Rückenlehnen 2 ist in an sich bekannter Weise eine längliche Kassette 3 befestigt, in der in der nicht gezeigten Außerbetriebsstellung ein Trenngitternetz 4 aufgenommen ist, das in der Darstellung nach Fig. 1 in die Betriebsstellung gebracht ist. Die Kassette 3 ist außerdem noch mit einer Laderaumabdeckung 5 versehen, die in der Darstellung nach Fig. 1 eingerollt ist. Sie überdeckt daher den Laderaum nicht.

Das Trenngitternetz 4 ist in nicht näher dargestellter Weise mit seinem ersten Ende innerhalb der Kassette 3 auf einer Rollowelle befestigt, die beispielweise in der gezeigten Lage des Trenngitternetzes 4 dynamisch blockiert sein kann, worauf aber noch eingegangen werden wird. Mit dem zweiten Ende 4a ist das Trenngitternetz 4 in Form einer Schlaufe an einer durchgehenden Führungsstange 6 befestigt, die beim gezeigten Ausführungsbeispiel an ihren beiden Enden mit hammerkopfartig ausgebildeten Kupplungselementen 7 versehen ist, die in Aufnahmen 8 im Bereich des - nicht gezeigten - Dachhimmels an der Karosserie befestigt sind und zur mechanischen Halterung der Kupplungselemente 7 in der dargestellten Betriebsstellung des Trenngitternetzes 4 ausgebildet sind. Die Führungsstange 6 ist dabei, wie besser aus Fig. 2 hervorgeht, lösbar mit einer stangenförmigen Halterung 9 verbunden, die Teil eines Antriebes ist, der dazu dient, das Trenngitternetz 4 über einen Servomotor aus der Außerbetriebsstellung innerhalb der Kassette 3 in die in Fig. 1 gezeigte Betriebsstellung zu bringen.

Zu diesem Zweck ist die Halterung 9 mit zwei Schwenkarmen 10 verbunden, die mit ihrem unteren Ende an der Kassette 3 angelenkt sind und in nicht näher dargestellter Weise über ein Getriebe oder dergleichen mit einem Servomotor so verbunden sind, daß sie aus einer in etwa mit der Oberkante der Kassette 3 fluchtenden Lage in die in Fig. 1 gezeigte hochgeschwenkte Lage verstellbar sind. Mit ihren oberen Enden sind die Schwenkhebel 10 an Gleitstücken 110 gelagert, die sich in Längsrichtung der Halterung 9 bei diesem Schwenkvorgang bewegen können. Die beiden Schwenkarme 10 sind daher in der Lage die Halterung 9 aus einer auf der Kassette 3 aufliegenden Lage in die in der Fig. 1 gezeigte Stellung zu bringen, in der das Trenngitternetz 4 seine Betriebslage einnimmt.

In dieser Betriebslage sind die Kupplungselemente 7 jeweils in ihren Halterungen 8 eingerastet und dort mechanisch so verriegelt, daß bei einer Belastung, die vom Laderaum 1 aus nach vorne zum Fahrgastraum hin auf das Trenngitternetz 4 wirkt, dieses Trenngitternetz 4 fest am Dachhimmel gehalten wird, um einen Schutz für den Fahrgastraum zu bieten. Das erste, in der Kassette 3 auf einer Rollowelle gehaltene Ende des Trenngitternetzes 4 kann dabei - wenn nicht die übliche Blockierung durch in die Maschen des Netzes 4 eingreifende Zähne an der Oberkante der Kassette 3 vorgesehen sein soll - durch eine dynamische Blockierung der Rollowelle gehalten werden, die dann wirksam wird, wenn über einen Sensor 11 die ordnungsgemäße Einführung der Kupplungselemente 7 in die Aufnahmen 8 und die Verriegelung innerhalb derselben registriert wird. Dieser Sensor 11 kann aus einem Endschalter 11a bestehen, der der Halterung 8 zugeordnet ist und beim ordnungsgemäßen Einführen der Kupplungselemente 7 in die Halterungen 8 ein Signal gibt, das dann die Blockierung der Rollowelle innerhalb der Kassette 3 auslöst.

Da beim gezeigten Ausführungsbeispiel die Kassette 3 - wie an sich bekannt - lösbar an den Rückenlehnen 2 angebracht ist, muß natürlich die Energieversorgung für den nicht gezeigten Servomotor zur Verstellung der Schwenkarme 10 über Steckanschlüsse erfolgen, bei denen ein einfach zu betätigender Stecker der Kassette 3 und eine Steckbuchse der Karosserie zugeordnet wird. Über diese Steckverbindung kann auch das vom Sensor 11 kommende Signal zum Zweck der Blockierung der Rollowelle der Kassette 3 zugeleitet werden.

Um bei der gezeigten Ausführungsform auch dann die Anordnung des Trenngitternetzes 4 zu ermöglichen, wenn die Rückenlehnen 2 nach vorne umgeklappt sind, ist in an sich bekannter Weise dieses Trenngitternetz 4 weiter aus der Kassette 3 ausziehbar, als das in Fig. 1 gezeigt ist.

Beim Ausführungsbeispiel ist der Antrieb über den Servomotor und die Schwenkhebel 10 so ausgelegt, daß er ausreicht, um das Trenngitternetz 4 bzw. dessen Kupplungselemente 7 in der in Fig. 1 dargestellten Lage der Rückenlehnen 2 in die Aufnahmen 8 einzuführen und so eine selbsttätige Anordnung einer Laderaumabtrennung zu ermöglichen. Bei umgeklappten Rückenlehnen wird es aber notwendig, das Trenngitternetz 4 von Hand bis in die weiteren Aufnahmen in Bereich des Dachhimmels zu führen, um dann auch eine Abtrennung der beiden Vordersitze vom restlichen Laderaum zu erreichen.

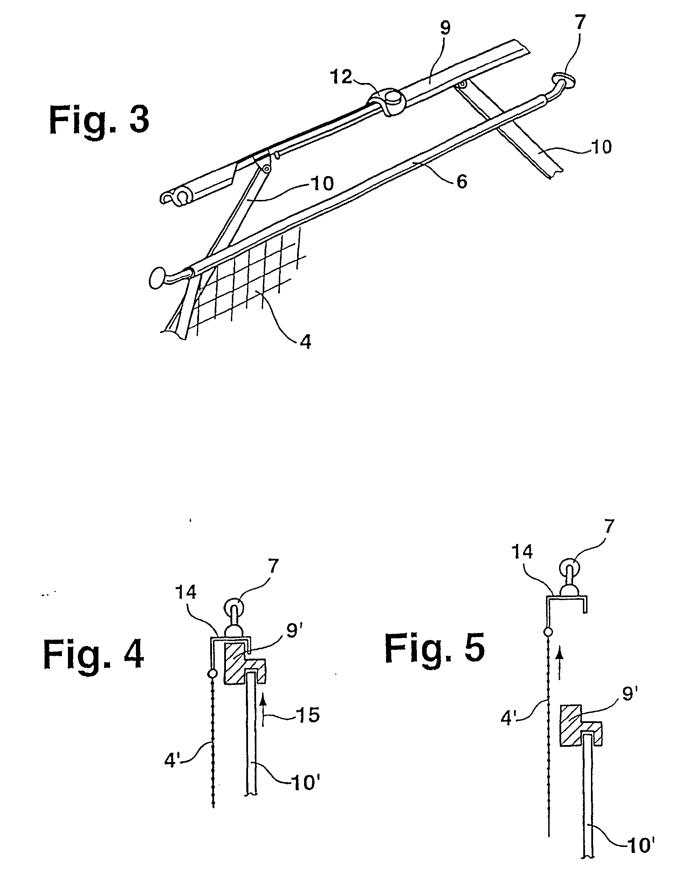

Zu diesem Zweck ist gemäß den Fig. 2 und 3 vorgesehen, daß die Führungsstange 6 des Trenngitternetzes 4 von der Halterung 9 lösbar ausgebildet ist. Beispielsweise kann zu diesem Zweck eine Rasteinrichtung 12 mit einem Betätigungsknopf 13 vorgesehen sein, der die Entnahme der Führungsstange 6 mit dem Trenngitternetz 4 nach unten aus der Halterung 9 ermöglicht. Die dann freigewordene Führungsstange 6 kann von Hand in bekannter Weise nach oben gezogen werden. Die Rollowelle ist in diesem Zustand, wie vorher ausgeführt, nicht blockiert.

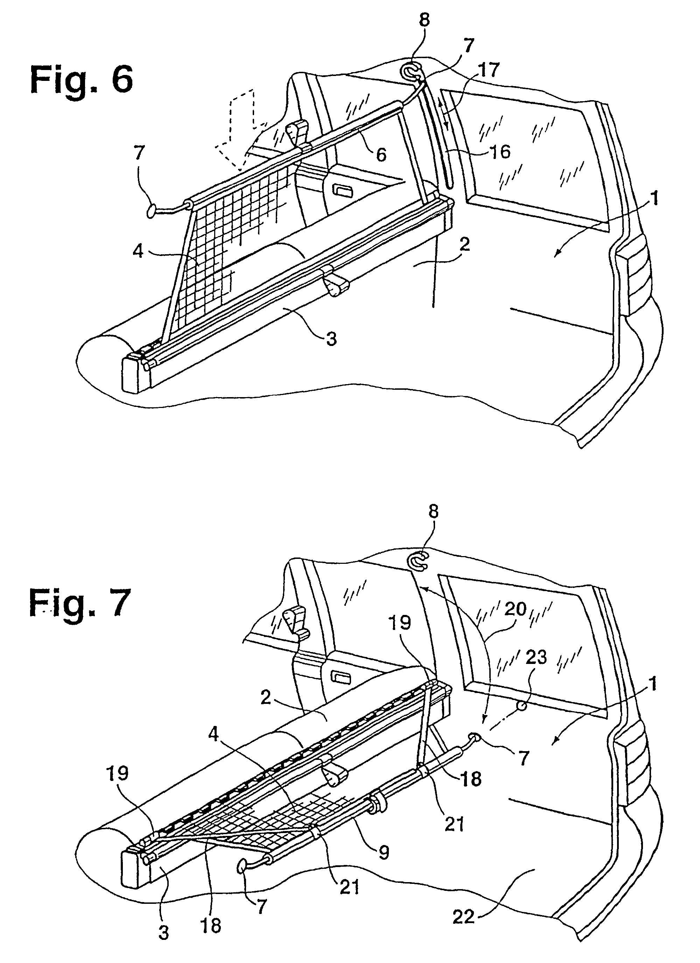

Die Fig. 4 und 5 zeigen schematisch die Ausgestaltung durch die das Trenngitternetz, das in den Fig. 4 und 5 mit 4' bezeichnet ist, vom Antrieb (hier 10') und von der Halterung (hier 9') gelöst werden kann. Dem Trenngitternetz 4' ist zu diesem Zweck - anders als in den Fig. 2 und 3 - eine winkelförmige Halterung 14 zugeordnet, die sich über eine Kante der Halterung 9' legen läßt, so daß sich das Trenngitternetz 4' im Sinn des Pfeiles 15 von der Halterung 9' über den Antrieb 10' nach oben in die Betriebsstellung bewegen läßt.

Soll das Trenngitternetz 4' abgehängt werden, so genügt es, die Halterung 14, die mit den Kupplungselementen 7 versehen ist, oder eine entsprechende Führungsstange, die mit einzelnen Haken in der für die Halterung 14 gezeigten Form versehen ist, von der Halterung 9' nach oben abzunehmen und von Hand in die entsprechenden Aufnahmen einzuhängen, wenn die Rückenlehnen nach vorne geklappt sind.

Die Fig. 6 zeigt eine Abwandlung einer Laderaumabtrennung nach der Erfindung. Hier ist an den Seitenwänden des Lade- bzw. Kofferraumes 1 und im Bereich der Rückenlehnen 2 der Fondsitze in den Seitenwänden der Karosserie jeweils eine bis zu einer Aufnahme 8 für Kupplungselemente 7 der Führungsstange 6 des Trenngitternetzes 4 verlaufende Nut 16 vorgesehen, in der die Kupplungselemente 7 geführt sind. In dieser Nut ist eine nicht näher gezeigte Antriebsvorrichtung angeordnet, die über einen Servomotor ein Antriebsteil im Sinn der Pfeile 17 bewegt, welches die Kupplungselemente 7 in der Nut 16 führt. Die Kupplungselemente 7 werden dabei in der Nut 16 von einer Außerbetriebsstellung ausgehend, in der sie im Bereich des unteren Endes der Nut 16 sind, bis in die Betriebsstellung geführt, in der sie in den Aufnahmen 8 in der schon anhand Fig. 1 beschriebenen Art und Weise aufgenommen und verriegelt sind. Bei dieser Ausführungsform, bei der die Kassette 3 den Antrieb für das Trenngitternetz 4 nicht selbst enthält, brauchen daher keine Steckanschlüsse für einen Antrieb an der Kassette 3 vorgesehen zu sein. Es ist lediglich dafür zu sorgen, daß die Kupplungselemente 7 nach dem Anbringen der Kassette 3 an den Rückenlehnen 2 in die Nut 16 so eingeführt werden können, daß sie dort mit ihrem Antriebsteil in Verbindung kommen. Die Einführung der Kupplungselemente, die auch hier hammerkopfartig ausgebildet sein können, kann beispielsweise durch eine schlüssellochartige Erweiterung am unteren Ende der Nut 16 erfolgen.

Die Fig. 7 schließlich zeigt eine weitere Variante, bei der zwei Schwenkhebel 18 mit der Halterung 9 für das Trenngitternetz 4 verbunden sind, die aber in Lagern 19 mit einer parallel zu der Rückenlehnenoberkante verlaufenden Achse gehalten und mit einem der Kassette 3 zugeordneten, aber nicht näher gezeigten Antrieb so verbunden sind, daß sie im Sinn der Pfeile 20 um ihre durch die Lagerungen 19 gegebene Achse verschwenkbar sind. Die Schwenkarme 18 sind in diesem Fall beispielsweise durch Schellen 21 fest mit der Halterung 9 verbunden und sie lassen sich aus der nicht gezeigten Betriebsstellung, in der wiederum die Kupplungselemente 7 in den Aufnahmen 8 eingesetzt und verriegelt sind, in die in Fig. 7 gezeigte Stellung, also in eine Außerbetriebsstellung verschwenken, in der das Trenngitternetz 4 etwa parallel zum Boden 22 des Lade- bzw. Kofferraums 1 verläuft, oder in eine Stellung, was natürlich noch günstiger ist, in der das Trenngitternetz 4 etwa parallel an der Rückseite der Rückenlehnen 2 anliegt.

Da in diesem Fall der Antrieb für die Schwenkarme 18 wiederum der Kassette 3 zugeordnet ist, muß auch hier die Energieversorgung dieses Servomotors des Antriebs über Steckanschlüsse erfolgen.

Nicht gezeigt ist bei allen Ausführungsformen die Möglichkeit, das Trenngitternetz 4, das im Fall der Fig. 7 natürlich auch als eine nicht flexible Wand ausgebildet sein kann, noch mit einem Notfallantrieb zu versehen, der nur im Crashfall wirksam wird und die Laderaumabtrennung, sofern sie nicht schon in der Betriebsstellung steht, schlagartig in die Betriebsstellung bringt.

Zu diesem Zweck kann, wie beispielsweise für Überrollbügel von Cabriolets bekannt, ein pyrotechnischer Antrieb vorgesehen sein. Möglich wäre aber auch die Anordnung eines Federspeichers, der - wie die Steuerung des Airbags - von einem Sensor im Crashfall ausgelöst wird. Bei allen Ausführungsbeispielen ist es schließlich auch möglich, einen Sensor, beispielsweise in der Art einer Lichtschranke 23 vorzusehen, der in etwa in Höhe der Oberkanten der Rückenlehnen 2 seitlich im Laderaum 1 angebracht ist. Dieser Sensor kann erfassen, ob eine Beladung des Kofferraumes 1 bis zu seiner Höhe erfolgt ist oder nicht. Wird der Sensor 23 daher in einer Höhe angebracht, in der alle Gepäck- oder Ladestücke noch sicher unterhalb der Oberkante der Rückenlehne 2 liegen, so gibt der Sensor 23 kein Signal an den Antrieb für die Laderaumabtrennung ab. Erfolgt die Beladung jedoch über diese vom Sensor 23 erfaßte Höhe hinaus, dann bewirkt das Signal dieses Sensors, daß der Antrieb für die Laderaumabtrennung, d.h. also für das Trenngitternetz 4 oder die schwenkbare Wand nach Fig. 7, ausgelöst und diese Laderaumabtrennung in die Betriebsstellung verstellt wird. Diese Ausgestaltung gibt daher bei Überbeladung automatisch die Gewähr dafür, daß der Fahrgastraum gegenüber dem Lade- oder Kofferraum 1 abgesichert ist. In allen Fällen ist eine selbsttätige Verstellung der Laderaumabtrennung möglich, die zu einer Vereinfachung der Bedienung und, wie ausgeführt, auch zu einer Verbesserung der Sicherheit führt.

## Patentansprüche

1. Laderaumabtrennung für Kraftfahrzeuge, insbesondere Kombifahrzeuge, mit einem Flächengebilde, das mit einem ersten Ende im Bereich der Oberkanten der Rückenlehnen (2) von Fondsitzen angebracht und mit dem zweiten Ende (4a) in einer Betriebsstellung im Bereich des Dachhimmels verankert und in einer Außerbetriebsstellung hinter der Rückenlehne liegt, wobei ein Servomotor als Antrieb vorgesehen ist, mit dem das zweite Ende (4a) des Flächengebildes (4) aus der Außerbetriebsstellung in die Betriebsstellung oder umgekehrt verfahrbar ist, **dadurch gekennzeichnet, dass** ein Sensor (23) zur Überwachung der Ladehöhe vorgesehen ist, der bei Überschreiten einer bestimmten Ladehöhe den Antrieb aktiviert.

2. Laderaumabtrennung nach Anspruch 1, **dadurch gekennzeichnet, daß** das zweite Ende (4a) mit Kupplungselementen (7) versehen ist, die mit karosseriefesten Aufnahmen (8) in der Betriebsstellung zusammenwirken und diese Positionierung über eine Verriegelungseinrichtung fixieren.

3. Laderaumabtrennung nach Anspruch 2, **dadurch gekennzeichnet, daß** ein Sensor (11) zur Überwachung der Verriegelung in der Betriebsstellung vorgesehen ist.

4. Laderaumabtrennung nach Anspruch 3, **dadurch gekennzeichnet, daß** der Sensor (11) als ein von mindestens einem Kupplungselement (7) betätigter Endschalter (11a) ausgebildet ist.

5. Laderaumabtrennung nach Anspruch 1, **dadurch gekennzeichnet, daß** der Sensor (23) als eine optische Überwachungseinrichtung ausgebildet ist.

6. Laderaumabtrennung nach dem Oberbegriff des Anspruchs 1 oder nach Anspruch 1, **dadurch gekennzeichnet, daß** eine Überwachungseinrichtung vorgesehen ist, die im Crashfall die schlagartige Verstellung des Flächengebildes (4) in die Betriebsstellung veranlaßt.

7. Laderaumabtrennung nach Anspruch 1, **dadurch gekennzeichnet, daß** die Überwachungseinrichtung einen pyrotechnischen Antrieb oder einen Federspeicher als Antrieb auslöst.

8. Laderaumabtrennung nach Anspruch 1, bei der das Flächengebilde als ein Trenngitternetz (4) ausgebildet und das zweite Ende (4a) mit einer durchgehenden Führungsstange (6) versehen ist, **dadurch gekennzeichnet, daß** die beiden Enden der Führungsstange (6) in je einer Nut (16) an der Seitenwand der Fahrzeugkarosserie geführt sind, und daß dieser Nut (16) der Antrieb für die Bewegung des Flächengebildes (4) zugeordnet ist.

9. Laderaumabtrennung nach Anspruch 8, bei der das Flächengebilde (4) in einer Kassette (3) aufrollbar ist, **dadurch gekennzeichnet, daß** der Kassette (3) der Antrieb für das Flächengebilde (4) zugeordnet ist.

10. Laderaumabtrennung nach Anspruch 9, **dadurch gekennzeichnet, daß** der Antrieb als ein Antrieb für Schwenkhebel (10, 18) ausgebildet ist.

11. Laderaumabtrennung nach den Ansprüchen 2, 3 und 9, **dadurch gekennzeichnet, daß** die Rollowelle des Trenngitternetzes (4) in der verriegelten und gesicherten Betriebsstellung dynamisch blockiert ist.

## Claims

1. Load compartment partitioning device for motor vehicles, especially estate vehicles, having a planar structure which is attached at a first end in the region of the upper edges of the backs (2) of rear seats and in an operating position is anchored at the second end (4a) in the region of the inside roof lining and in a rest position lies behind the seat back, there being provided a servomotor as a drive, by means of which the second end (4a) of the planar structure (4) can be moved from the rest position into the operating position or *vice versa*, **characterised in that** a sensor (23) is provided for monitoring the load height, which sensor activates the drive if a given load height is exceeded.

2. Load compartment partitioning device according to claim 1, **characterised in that** the second end (4a) is provided with coupling elements (7) which cooperate in the operating position with receivers (8) fixed to the vehicle body and fix that position by way of a locking device.

3. Load compartment partitioning device according to claim 2, **characterised in that** a sensor (11) is provided for monitoring the locking in the operating position.

4. Load compartment partitioning device according to claim 3, **characterised in that** the sensor (11) is in the form of a limit switch (11a) which is operated by at least one coupling element (7).

5. Load compartment partitioning device according to claim 1, **characterised in that** the sensor (23) is in the form of an optical monitoring device.

6. Load compartment partitioning device according to the precharacterising clause of claim 1 or according to claim 1, **characterised in that** there is provided a monitoring device which, in the event of a crash, causes the planar structure (4) to be moved suddenly into the operating position.

7. Load compartment partitioning device according to claim 1, **characterised in that** the monitoring device triggers a pyrotechnic drive or a spring-loaded drive as the drive.

8. Load compartment partitioning device according to claim 1, in which the planar structure is in the form of a partitioning grid (4) and the second end (4a) is provided with a continuous guide rod (6), **characterised in that** the two ends of the guide rod (6) are each guided in a groove (16) in the side wall of the vehicle body, and **in that** the drive for moving the planar structure (4) is associated with that groove (16).

9. Load compartment partitioning device according to claim 8, in which the planar structure (4) can be rolled up in a cassette (3), **characterised in that** the drive for the planar structure (4) is associated with the cassette (3).

10. Load compartment partitioning device according to claim 9, **characterised in that** the drive is in the form of a drive for pivoted levers (10, 18).

11. Load compartment partitioning device according to claims 2, 3 and 9, **characterised in that** the rolling shaft of the partitioning grid (4) is dynamically blocked in the locked and secured operating position.

## Revendications

1. Séparateur du compartiment à bagages de véhicules automobiles, notamment de véhicules de type break, avec une structure plane qui est montée par une première extrémité dans la région des bords supérieurs des dossiers (2) de sièges arrière et qui, par sa deuxième extrémité (4a), est ancrée dans la région du plafond dans une position d'utilisation et repose derrière le dossier dans une position de non-utilisation, un servomoteur étant prévu comme entraînement, par lequel la deuxième extrémité (4a) de la structure plane (4) peut être déplacée de la position de non-utilisation dans la position d'utilisation ou réciproquement, **caractérisé en ce qu'**un capteur (23) est prévu pour surveiller la hauteur de chargement, lequel active l'entraînement en cas de dépassement d'une hauteur de chargement donnée.

2. Séparateur de compartiment à bagages selon la revendication 1, **caractérisé en ce que** la deuxième extrémité (4a) est pourvue d'éléments d'accouplement (7) qui, dans la position d'utilisation, coopèrent avec des éléments récepteurs (8) solidaires de la carrosserie et fixent ce positionnement au moyen d'un mécanisme de verrouillage.

3. Séparateur de compartiment à bagages selon la revendication 2, **caractérisé en ce qu'**un capteur (11) est prévu pour surveiller le verrouillage dans la position d'utilisation.

4. Séparateur de compartiment à bagages selon la revendication 3, **caractérisé en ce que** le capteur (11) est réalisé sous la forme d'un interrupteur de fin de course (11a) actionné par au moins un élément d'accouplement (7).

5. Séparateur de compartiment à bagages selon la revendication 1, **caractérisé en ce que** le capteur (23) est réalisé sous forme d'organe de surveillance optique.

6. Séparateur de compartiment à bagages selon le préambule de la revendication 1 ou selon la revendication 1, **caractérisé en ce qu'**il est prévu un organe de surveillance qui, en cas de collision, provoque le brusque déplacement de la structure plane (4) dans la position d'utilisation.

7. Séparateur de compartiment à bagages selon la revendication 1, **caractérisé en ce que** l'organe de surveillance déclenche comme entraînement un entraînement pyrotechnique ou un accumulateur à ressort.

8. Séparateur de compartiment à bagages selon la revendication 1, selon lequel la structure plane est réalisée sous forme de filet de séparation (4) et la deuxième extrémité (4a) est pourvue d'une tige de guidage traversante (6), **caractérisé en ce que** les deux extrémités de la tige de guidage (6) sont chacune guidées dans une rainure (16) sur la paroi latérale de la carrosserie du véhicule, et **en ce que** l'entraînement pour le déplacement de la structure plane (4) est associé à cette rainure (16).

9. Séparateur de compartiment à bagages selon la revendication 8, selon lequel la structure plane (4) peut être enroulée dans un caisson (3), **caractérisé en ce que** l'entraînement pour la structure plane (4) est associé au caisson (3).

10. Séparateur de compartiment à bagages selon la revendication 9, **caractérisé en ce que** l'entraînement est conçu comme entraînement pour des leviers pivotants (10, 18).

11. Séparateur de compartiment à bagages selon les revendications 2, 3 et 9, **caractérisé en ce que** l'arbre d'enroulement du filet de séparation (4) est bloqué dynamiquement dans la position d'utilisation verrouillée et assujettie.
